# FASCICULE DE BREVET EUROPEEN

(11) **EP 2 673 545 B1**
(45) Date de publication et mention de la délivrance du brevet: **08.04.2015**
(21) Numéro de dépôt: 12707883.0
(22) Date de dépôt: 08.02.2012
(51) Int. Cl.: F16L 11/18, F02K 1/82, F16L 57/06, F16L 51/02, F16L 57/04

(54) **ELEMENT DE CONDUIT A PERTE DE CHARGE REDUITE**
ROHRELEMENT MIT VERRINGERTEM DRUCKABFALL
REDUCED PRESSURE-DROP PIPE ELEMENT

(30) Priorité: 11.02.2011 FR 1151117
(43) Date de publication de la demande: 18.12.2013
(73) Titulaire: Snecma, 75015 Paris (FR)
(72) Inventeur: FIOLEK, Michel, F-27190 Conches En Ouche (FR); DESCHAMPS, Mikaël, 27600 Fontaine Bellenger (FR)
(74) Mandataire: Intès, Didier Gérard André
(86) Numéro de dépôt international: PCT/FR2012/050268
(87) Numéro de publication internationale: WO 2012/107687

(56) Documents cités:
- DE-A1- 3 405 924
- GB-A- 1 531 792
- US-A- 1 505 121
- US-B1- 6 282 887

## Description

La présente invention a pour objet un élément de conduit pouvant servir d'élément de raccordement conformable sur toute ligne de circulation de fluide, gaz ou liquide, au sein de toute application industrielle, par exemple au sein d'un moteur de fusée.

On connaît des éléments de conduit de ce type qui comprennent une enveloppe tubulaire déformable, en forme de soufflet à protubérances annulaires faisant saillie intérieurement, de sorte que ledit soufflet permet d'aisément raccorder deux canalisations rigides non coaxiales de la ligne de circulation.

A l'intérieur de la ligne de circulation, les fluides peuvent être véhiculés à des vitesses importantes et/ou à des températures extrêmes, aussi bien cryogéniques que très élevées.

L'élément de conduit est particulièrement confronté à de telles contraintes lorsqu'il est par exemple destiné à être conformé sur une ligne de circulation de fluide qui est montée au sein d'un moteur de fusée, notamment pour permettre l'admission de carburants et de comburants vers la chambre de combustion de ces moteurs.

Afin de protéger l'enveloppe tubulaire de ces éléments de conduit connus contre des dégradations résultant d'effets de turbulences et/ou d'effets thermiques importants, une solution répandue consiste à faire circuler le fluide non pas directement dans l'enveloppe tubulaire en elle-même, mais à l'intérieur d'une chemise de protection comportant un tronçon d'extrémité que l'on vient fixer dans une extrémité de l'enveloppe tubulaire et dont l'extrémité libre se projette vers l'intérieur de l'enveloppe tubulaire.

Selon une variante de cette chemise de protection connue, un second tronçon se projette à l'intérieur de l'enveloppe tubulaire, une de ses extrémités s'engageant partiellement sur l'extrémité libre dudit tronçon d'extrémité.

Du fait de la cinématique de l'élément de conduit, un inconvénient de ces deux variantes connues est que la chemise de protection doit comporter une restriction de sa section de passage d'autant plus importante que le rayon de courbure à imprimer à l'élément de conduit pour le conformer en position est petit.

Bien que la variante à deux tronçons autorise une plus faible restriction de la section de passage que la variante à un seul tronçon, l'étranglement présent sur le trajet du fluide provoque pour les deux variantes des pertes de charges trop importantes sur la ligne de circulation.

En outre, il a été constaté des dégradations des extrémités des tronçons de la chemise de protection du fait de la sollicitation en vibration induite par la restriction d'écoulement du fluide.

Le document DE 3 405 924 A1 décrit un élément de conduit selon le préambule de la revendication 1.

Un objet de la présente invention est de remédier à ces problèmes en fournissant un élément de conduit permettant d'éliminer pratiquement la restriction de la section de passage de la chemise de protection.

Plus précisément, cet objet de l'invention est atteint par un élément de conduit qui comporte une enveloppe tubulaire déformable, en forme de soufflet à protubérances annulaires faisant saillie intérieurement ; et une chemise de protection comprenant un tronçon d'extrémité fixé dans l'enveloppe tubulaire et dont une extrémité libre se projette vers l'intérieur de l'enveloppe tubulaire, l'invention se caractérisant en ce que la chemise de protection comprend également plusieurs autres tronçons engagés partiellement les uns dans les autres, lesdits autres tronçons comportant chacun, en périphérie d'une surface extérieure, au moins un élément d'accrochage fixé sur ladite surface extérieure et coopérant avec au moins une protubérance annulaire.

On comprend qu'en augmentant le nombre de tronçons inclus dans la chemise de protection il est possible de minimiser la restriction de la section de passage au strict minimum et par conséquent, de pratiquement éliminer les turbulences d'écoulement du fluide traversant l'élément de conduit.

Plus précisément, en engageant les tronçons de la chemise de protection partiellement les uns dans les autres, et en faisant coopérer chacun de ces tronçons avec au moins une protubérance annulaire de l'enveloppe tubulaire par l'intermédiaire d'au moins un élément d'accrochage situé en périphérie d'une surface extérieure, on obtient une chemise de protection qui épouse bien mieux la forme de l'enveloppe tubulaire, quelque soit sa courbure.

Par ailleurs, ledit au moins un élément d'accrochage que comporte chaque autre tronçon peut être un élément rapporté à fixer sur ce tronçon (un élément dissocié, séparé, de ce tronçon, à fixer sur ce dernier), en particulier sur la surface extérieure de ce tronçon.

Avantageusement, cet élément d'accrochage peut être fixé sur la surface extérieure par soudage.

Avantageusement, lesdits autres tronçons de la chemise de protection comportent chacun, à intervalles sensiblement réguliers en périphérie d'une surface extérieure, plusieurs éléments d'accrochage, de préférence au moins trois, voire six comme dans les exemples illustrés plus loin. Cela ne signifie pas pour autant que le recours à des tronçons ne possédant qu'un seul élément d'accrochage ne serait pas satisfaisant, puisqu'une telle configuration permettrait malgré tout de positionner précisément les tronçons dans l'enveloppe tubulaire, et serait même avantageuse dans un élément de conduit présentant de faibles dimensions.

Selon une autre caractéristique préférentielle de l'invention, un tel autre tronçon de la chemise de protection comporte une bande de feuillard métallique enroulée partiellement sur elle-même, définissant ainsi la surface extérieure dudit autre tronçon en périphérie de laquelle est monté au moins un élément d'accrochage.

On comprend que selon cette caractéristique préférentielle de l'invention, un tronçon de la chemise de protection possède ainsi une certaine élasticité qui lui permet à la fois de rester enroulé partiellement sur lui-même à la façon d'un ressort spiral et de facilement s'engager partiellement dans un autre tronçon. Par ailleurs, la faible épaisseur du feuillard métallique contribue à l'augmentation de la section de passage et autorise une optimisation de la masse de la chemise de protection.

Selon un mode de mise en oeuvre préféré, un élément d'accrochage d'un tronçon a une forme de patte qui s'engage sur au moins une protubérance annulaire, le profil de la patte pouvant avantageusement représenter globalement un U, en particulier un U à branches divergentes.

Avantageusement, un élément d'accrochage d'un tronçon ne coopère qu'avec une seule protubérance annulaire de l'enveloppe tubulaire.

Cette solution permet d'utiliser des tronçons de faible longueur, de sorte que la chemise de protection épouse encore mieux la forme de l'enveloppe tubulaire, que l'élément de conduit puisse être courbé encore plus aisément et que la restriction de la section de passage soit pratiquement inexistante. Ce choix préférentiel n'interdit pas pour autant de faire coopérer un élément d'accrochage avec plusieurs protubérances annulaires. En effet, ce choix peut s'avérer particulièrement judicieux dans le cas où l'on souhaite justement renforcer localement la rigidité de l'élément de conduit, pour limiter sa courbure.

Avantageusement mais non nécessairement, l'élément de conduit selon la présente invention est apte à être équipé de renforts externes.

On comprend qu'il est ainsi possible de renforcer l'enveloppe tubulaire en la rigidifiant davantage par l'intermédiaire de renforts externes, ce qui est particulièrement avantageux notamment lorsque la pression du fluide véhiculé dans l'élément de conduit est importante.

De préférence, l'élément de conduit comprend alors plusieurs anneaux de renfort rigides comportant respectivement une protubérance annulaire qui fait saillie intérieurement et qui est apte à s'engager par l'extérieur dans une protubérance annulaire de l'enveloppe tubulaire.

De préférence, le tronçon d'extrémité de la chemise de protection est fixé dans l'enveloppe tubulaire par soudage.

Selon un mode de mise en oeuvre préféré, le tronçon d'extrémité est fixé à l'enveloppe tubulaire du côté d'entrée du fluide.

On comprend que selon ce mode de mise en oeuvre préféré, les sollicitations en vibration à l'entrée de la chemise de protection provoquées par l'écoulement du fluide sont très fortement réduites.

D'autres caractéristiques et avantages de l'invention apparaîtront mieux à la lecture de la description qui suit d'un mode de mise en oeuvre de l'invention donné à titre d'exemple non limitatif. La description se réfère aux dessins annexés sur lesquels :
- la figure 1 représente une vue en coupe longitudinale de l'élément de conduit conforme à l'invention ;
- la figure 2 est une vue du détail II de la figure 1, en coupe longitudinale, de l'élément de conduit conforme à l'invention ;
- la figure 3 est une vue en perspective d'un tronçon de la chemise de protection conforme à l'invention ;
- la figure 4 est une vue du détail II de la figure 1, en coupe longitudinale, de l'élément de conduit conforme à l'invention mettant en évidence un mode de réalisation particulier de l'enveloppe tubulaire.

On va décrire l'organisation générale de l'élément de conduit conforme à l'invention.

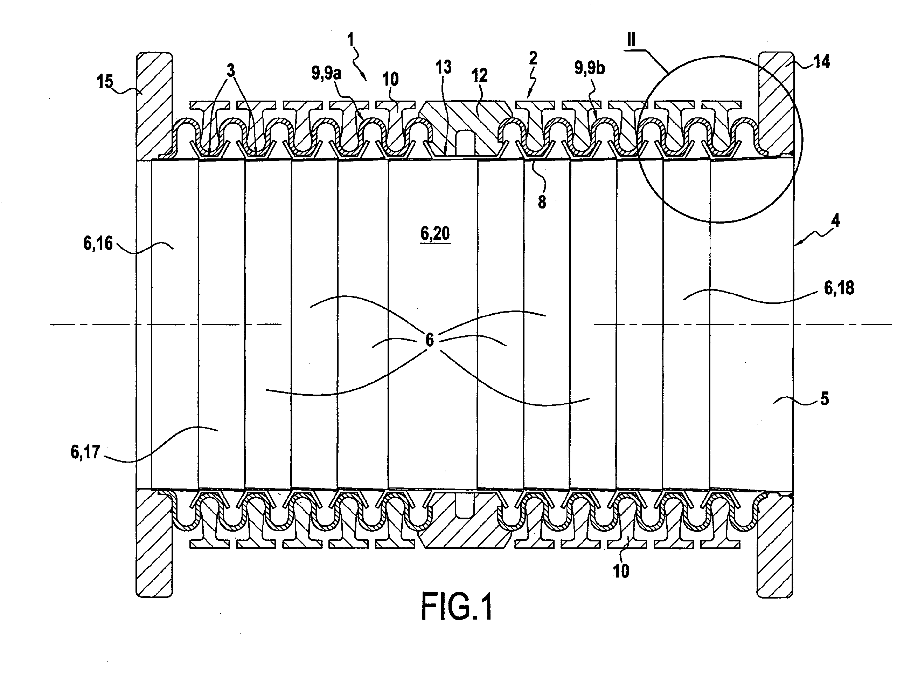

L'élément de conduit 1 (cf. figure 1) comporte une enveloppe tubulaire déformable 2, en forme de soufflet à protubérances annulaires 3 faisant saillie intérieurement.

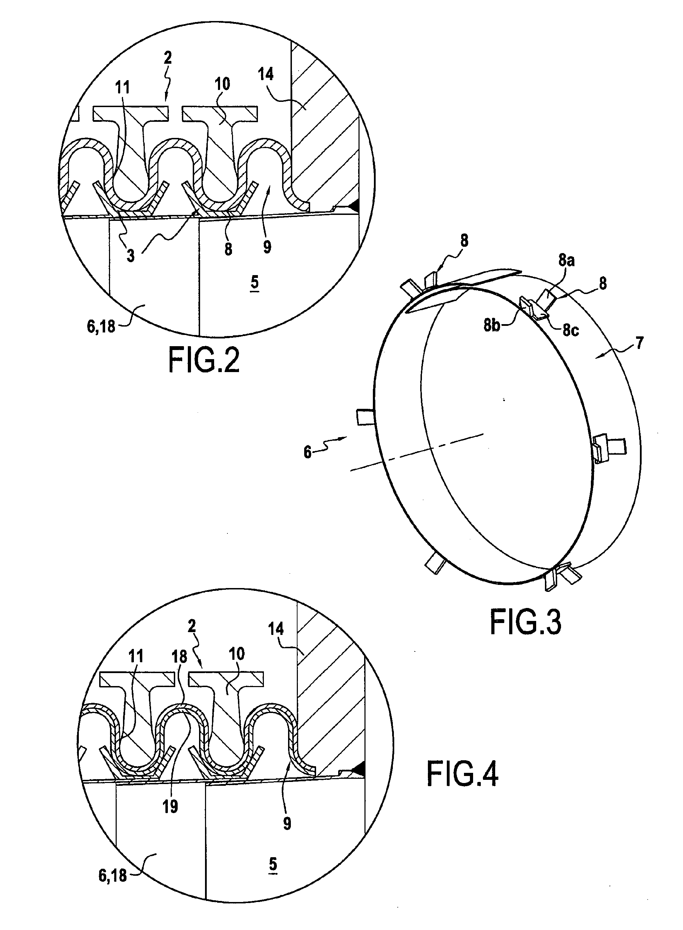

Le soufflet de l'enveloppe tubulaire 2 comporte une gaine d'étanchéité 9 métallique, de préférence en acier inoxydable. La gaine d'étanchéité 9 peut être réalisée soit à partir d'une seule pièce (cf. figure 2), soit à partir de deux feuillards 18 et 19 ou plus conformés ensembles (cf. figure 4).

Par ailleurs, lorsque la pression régnant à l'intérieur de l'enveloppe tubulaire 2 est comprise entre quelques bars et quelques centaines bars, il est possible, si nécessaire, de monter sur la gaine d'étanchéité 9 des anneaux de renfort 10 rigides. De tels anneaux de renfort 10 sont avantageusement en métal, de préférence en acier, et comportent respectivement une protubérance annulaire 11 faisant saillie intérieurement et dont le profil est prévu apte à venir s'engager par l'extérieur dans la protubérance annulaire 3.

Le profil de la protubérance annulaire 11 d'un anneau de renfort 10 peut être à flancs parallèles mais est de préférence en forme de goutte d'eau (cf. figures 2 et 4). Un profil d'une protubérance annulaire 11 en forme de goutte d'eau permet à l'anneau de renfort 10 engagé dans la protubérance annulaire 3 de la gaine d'étanchéité 9 de ne pas s'opposer à la courbure de l'enveloppe tubulaire 2.

Par ailleurs, pour que la protubérance annulaire 11 d'un anneau de renfort 10 s'engage par l'extérieur dans une protubérance annulaire 3 de la gaine d'étanchéité 9, chaque anneau de renfort 10 peut être avantageusement prévu en deux parties.

L'enveloppe tubulaire 2 peut comporter un anneau central 12 rigide métallique, de préférence en acier, afin de mieux répartir les contraintes mécaniques subies par l'enveloppe tubulaire 2 lors de sa courbure. La gaine d'étanchéité 9 est alors dédoublée en deux parties 9a et 9b agencées de part et d'autre de l'anneau central 12, une extrémité de chacune des deux parties 9a et 9b ainsi formées étant respectivement engagée dans une extrémité à l'intérieur de l'anneau central 12.

L'anneau central rigide 12 présente une protubérance annulaire 13 qui fait saillie intérieurement, comme illustré dans la figure 1. Cette protubérance annulaire 13 comporte une gorge intérieure afin d'optimiser la masse de l'anneau central 12.

L'élément de conduit 1 comporte également une chemise de protection 4 comprenant un tronçon d'extrémité 5 fixé dans une bride d'entrée 14 de l'enveloppe tubulaire 2 et dont une extrémité libre se projette vers l'intérieur de l'enveloppe tubulaire 2.

Le tronçon d'extrémité 5 est fixé dans la bride d'entrée 14 de l'enveloppe tubulaire 2, de préférence par soudage.

Conformément à l'invention, la chemise de protection 4 de l'élément de conduit 1 comporte plusieurs autres tronçons 6 qui s'engagent partiellement les uns sur les autres.

Un tel tronçon 6 se présente sous la forme d'une bande de feuillard métallique enroulée partiellement sur elle-même (cf. figure 3). La longueur de la bande de feuillard correspond à un peu plus de la longueur d'une protubérance annulaire 3, de sorte que le tronçon 6 une fois installé dans l'enveloppe tubulaire 2 puisse s'engager partiellement dans le tronçon adjacent.

Selon l'exemple illustré, un tel tronçon 6 comporte plusieurs éléments d'accrochage 8 fixés sur ce tronçon 6, de préférence par soudage.

Plus particulièrement, ce tronçon 6 comporte six éléments d'accrochage 8 disposés à intervalles sensiblement réguliers en périphérie de sa surface extérieure 7, de sorte que tous les éléments d'accrochage 8 s'engagent sur une même protubérance annulaire 3 de l'enveloppe tubulaire 2. Les éléments d'accrochage 8 permettent ainsi aux tronçons 6 d'être maintenus dans des positions prédéterminées dans l'enveloppe tubulaire 2.

Un tel élément d'accrochage 8 est constitué d'une plaque métallique rectangulaire, de préférence du même métal que celui utilisé pour réaliser un tronçon 6, dont les deux extrémités 8a et 8b sont pliées suivant une direction latérale du tronçon 6 avec un angle de pliage inférieur à 90°. La base 8c de l'élément d'accrochage 8 est fixée, de préférence par soudure, de façon excentrée sur la périphérie de la surface extérieure 7 d'un tronçon 6. L'objet ainsi plié a une forme de patte avec un profil représentant globalement un U à branches divergentes. Cette forme permet de facilement engager l'élément d'accrochage 8 sur la protubérance annulaire 3 car les parois pliées 8a et 8c assurent une fonction de guidage au moment de l'insertion. En outre, cette forme présente l'avantage de minimiser les points de contact à l'interface entre l'élément d'accrochage 8 et la protubérance annulaire 3, de sorte qu'un léger rotulage d'un tronçon 6 par rapport à une protubérance annulaire soit facilité.

Comme illustré dans l'exemple, il peut être avantageux de raccourcir la longueur des parois pliées 8a et 8b tout en conservant intact les dimensions de la base 8c dans le but de faciliter l'application de points de soudure au moment de la fixation de l'élément d'accrochage 8 sur la surface extérieure 7.

Lorsque la présence d'un anneau central 12 est requise, les éléments d'accrochage 8 d'un tronçon central 20 positionné à la hauteur de l'anneau central rigide 12 viennent s'engager directement sur la protubérance annulaire 13 de l'anneau central 12 (cf. figure 1). Ainsi, puisque la longueur de la protubérance 13 dépend de la longueur de l'anneau central rigide 12, les dimensions des éléments d'accrochage 8 dudit tronçon central 20 sont adaptées en conséquence, et la longueur de ce tronçon central 20 est également adaptée de façon à ce qu'elle demeure supérieure à celle de l'anneau central rigide 12, de sorte que la continuité dans l'assemblage de la chemise de protection 4 ne soit pas rompue.

On va à présent décrire un mode opératoire de montage d'un élément de conduit 1 selon le mode de mise en oeuvre de l'invention précédemment décrit.

La première étape consiste à monter un premier tronçon 16 dans l'enveloppe tubulaire 2 en engageant ses éléments d'accrochage 8 sur la première protubérance annulaire 3 rencontrée du côté d'une bride de sortie 15. Pour ce faire, le premier tronçon 16 est pris en tenaille en deux points de sa surface extérieure 7, entre les éléments d'accrochage 8, au moyen par exemple d'une pince adaptée, ce qui a pour effet d'augmenter par élasticité la longueur de la portion enroulée sur elle-même du premier tronçon 16, si bien que le diamètre de ce dernier diminue. Il est alors possible d'introduire le premier tronçon 16 dans l'enveloppe tubulaire 2 en le faisant passer par la bride de sortie 15. En relâchant la pression exercée sur le premier tronçon 16, ce dernier retrouve par élasticité son diamètre initial, ce qui le fixe en position dans l'enveloppe tubulaire 2.

Dans un second temps, un second tronçon 17 est pris en tenaille pour subir par élasticité une réduction de diamètre et est ensuite positionné au niveau de la seconde protubérance annulaire 3 rencontrée du côté de la bride de sortie 15, en faisant passer le second tronçon 17 par la bride de sortie 15 puis par l'intérieur du premier tronçon 16 dans l'enveloppe tubulaire 2. Puisque la longueur des tronçons 6 est supérieure à celle des protubérances annulaires 3 et puisque les éléments d'accrochages 8 sont fixés de façon excentrée en périphérie de la surface extérieure 7, le second tronçon 17, une fois libéré de la contrainte exercée par la prise en tenaille, se retrouve dans un état tel qu'il est partiellement engagé dans le premier tronçon 16.

Il suffit d'employer exactement le même mode opératoire pour le montage des tronçons 6 suivants.

Une fois que tous les tronçons 6 ont été montés, le dernier tronçon 18 a une extrémité qui reste libre du côté de la bride d'entrée 14. Le tronçon d'extrémité 5, qui n'est pas forcément extensible comme les autres tronçons 6, est alors introduit dans l'enveloppe tubulaire 2 en passant par la bride d'entrée 14. Le tronçon d'extrémité 5 est enfoncé dans l'enveloppe tubulaire 2 jusqu'à être partiellement engagé dans l'extrémité restée libre du dernier tronçon 18. Une fois positionné, le tronçon d'extrémité 5 est enfin soudé dans la bride d'entrée 14.

## Revendications

1. Elément de conduit (1) comprenant :
une enveloppe tubulaire (2) déformable, en forme de soufflet (9) à protubérances annulaires (3) faisant saillie intérieurement ;
une chemise de protection (4) comprenant un tronçon d'extrémité (5) fixé dans l'enveloppe tubulaire (2) et dont une extrémité libre se projette vers l'intérieur de l'enveloppe tubulaire (2),
la chemise de protection (4) comprenant également plusieurs autres tronçons (6, 16, 17, 18, 20) engagés partiellement les uns dans les autres, **caractérisé en ce que** lesdits autres tronçons (6, 16, 17, 18, 20) comportent chacun, en périphérie d'une surface extérieure (7), au moins un élément d'accrochage (8) fixé sur ladite surface extérieure (7) et coopérant avec au moins une protubérance annulaire (3).

2. Elément de conduit (1) selon la revendication 1, **caractérisé en ce qu'**un tel autre tronçon (6, 16, 17, 18, 20) précité comporte une bande de feuillard métallique enroulée partiellement sur elle-même et définissant la surface extérieure (7).

3. Elément de conduit (1) selon l'une quelconque des revendications 1 ou 2, **caractérisé en ce que** l'élément d'accrochage (8) a une forme de patte qui s'engage sur au moins une protubérance annulaire (3).

4. Elément de conduit (1) selon la revendication 3, **caractérisé en ce que** le profil de la patte représente globalement un U, notamment un U à branches divergentes.

5. Elément de conduit (1) selon l'une quelconque des revendications 1 à 4, **caractérisé en ce que** l'élément d'accrochage (8) ne coopère qu'avec une seule protubérance annulaire (3).

6. Elément de conduit (1) selon l'une quelconque des revendications 1 à 5, **caractérisé en ce qu'**un tel autre tronçon (6, 16, 17, 18, 20) comporte plusieurs éléments d'accrochage (8), de préférence au moins trois.

7. Elément de conduit (1) selon l'une quelconque des revendications 1 à 6, **caractérisé en ce que** le tronçon d'extrémité (5) est fixé dans l'enveloppe tubulaire (2) par soudage.

8. Elément de conduit (1) selon l'une quelconque des revendications 1 à 7, **caractérisé en ce que** le tronçon d'extrémité (5) est fixé à l'enveloppe tubulaire (2) du côté d'entrée du fluide.

9. Elément de conduit (1) selon l'une quelconque des revendications 1 à 8, **caractérisé en ce que** l'élément d'accrochage (8) est fixé sur la surface extérieure (7) par soudage.

## Patentansprüche

1. Leitungsrohrelement (1), umfassend:
eine verformbare rohrförmige Hülle (2) in Form eines Balgs (9) mit innen vorspringenden ringförmigen Ausstülpungen (3),
einen Schutzmantel (4), der einen in der rohrförmigen Hülle (2) befestigen Endabschnitt (5) umfasst und von dem ein freies Ende sich zum Inneren der rohrförmigen Hülle (2) erstreckt,
wobei der Schutzmantel (4) auch mehrere weitere Abschnitte (6, 16, 17, 18, 20), die teilweise ineinander gesteckt sind, umfasst,
**dadurch gekennzeichnet, dass** die weiteren Abschnitte (6, 16, 17, 18, 20) jeweils am Umfang einer Außenfläche (7) wenigstens ein Rastelement (8), das an der Außenfläche (7) befestigt ist und das mit wenigstens einer ringförmigen Ausstülpung (3) zusammenwirkt, umfassen.

2. Leitungsrohrelement (1) nach Anspruch 1, **dadurch gekennzeichnet, dass** ein solch vorgenannter weiterer Abschnitt (6, 16, 17, 18, 20) ein Metallfolienband, das teilweise auf sich selbst gewickelt ist und die Außenfläche (7) definiert, umfasst.

3. Leitungsrohrelement (1) nach einem der Ansprüche 1 oder 2, **dadurch gekennzeichnet, dass** das Rastelement (8) eine Laschenform aufweist, die wenigstens eine ringförmige Ausstülpung (3) übergreift.

4. Leitungsrohrelement (1) nach Anspruch 3, **dadurch gekennzeichnet, dass** das Profil der Lasche in seiner Gesamtheit ein U, insbesondere ein U mit auseinanderlaufenden Schenkeln darstellt.

5. Leitungsrohrelement (1) nach einem der Ansprüche 1 bis 4, **dadurch gekennzeichnet, dass** das Rastelement (8) nur mit einer einzigen ringförmigen Ausstülpung (3) zusammenwirkt.

6. Leitungsrohrelement (1) nach einem der Ansprüche 1 bis 5, **dadurch gekennzeichnet, dass** ein solch weiterer Abschnitt (6, 16, 17, 18, 20) mehrere Rastelemente (8), vorzugsweise wenigstens drei, umfasst.

7. Leitungsrohrelement (1) nach einem der Ansprüche 1 bis 6, **dadurch gekennzeichnet, dass** der Endabschnitt (5) in der rohrförmigen Hülle (2) festgeschweißt ist.

8. Leitungsrohrelement (1) nach einem der Ansprüche 1 bis 7, **dadurch gekennzeichnet, dass** der Endabschnitt (5) an der rohrförmigen Hülle (2) auf der Eintrittsseite des Fluids befestigt ist.

9. Leitungsrohrelement (1) nach einem der Ansprüche 1 bis 8, **dadurch gekennzeichnet, dass** das Rastelement (8) an der Außenfläche (7) festgeschweißt ist.

## Claims

1. A duct element (1) comprising:
• a deformable tubular covering (2) in the form of a bellows (9) having inwardly projecting annular projections (3);
• a protective sleeve (4) comprising an end segment (5) fastened in the tubular covering (2) and having a free end that projects towards the inside of the tubular covering (2),
wherein the protective sleeve (4) further comprises a plurality of other segments (6, 16, 17, 18, 20) engaged in part one within another, **characterized in that** each of said other segments (6, 16, 17, 18, 20) includes at a periphery of an outside surface (7) thereof at least one attachment element (8) that is fastened to said outside surface (7) and that co-operates with at least one annular projection (3).

2. A duct element (1) according to claim 1, **characterized in that** such an above-mentioned other segment (6, 16, 17, 18, 20) comprises a band of metal strip rolled up with partial overlap and defining the outside surface (7).

3. A duct element (1) according to claim 1 or claim 2, **characterized in that** the attachment element (8) is in the form of a tab that engages against at least one annular projection (3).

4. A duct element (1) according to claim 3, **characterized in that** the profile of the tab is generally U-shaped, in particular a U-shape with diverging branches.

5. A duct element (1) according to any one of claims 1 to 4, **characterized in that** the attachment element (8) cooperates with only one annular projection (3).

6. A duct element (1) according to any one of claims 1 to 5, **characterized in that** such another segment (6, 16, 17, 18, 20) has a plurality of attachment elements (8), preferably at least three of them.

7. A duct element (1) according to any one of claims 1 to 6, **characterized in that** the end segment (5) is fastened in the tubular covering (2) by welding.

8. A duct element (1) according to any one of claims 1 to 7, **characterized in that** the end segment (5) is fastened to the tubular covering (2) at a fluid inlet end thereof.

9. A duct element (1) according to any one of claims 1 to 8, **characterized in that** the attachment element (8) is fastened to the outside surface (7) by welding.
